# EUROPEAN PATENT APPLICATION

(11) **EP 0 755 965 A1**
(43) Date of publication of application: **29.01.1997**
(21) Application number: 96401610.9
(22) Date of filing: 18.07.1996
(51) Int. Cl.: C08J 3/12

(54) **Non-agglomerating elastomeric particles**

(30) Priority: 25.07.1995 US 507637
(71) Applicant: Zeon Chemicals Incorporated, Louisville, Kentucky 40211 (US)
(72) Inventor: Seil, Donald A., Louisville, Kentucky 40245 (US); Lenczyk, John P., Louisville, Kentucky 40222 (US); Kliever, L. Bruce, Crestwood, Kentucky 40014 (US)
(74) Representative: Rousset, Jean-Claude

(57) **Abstract**

Elastomeric particles, which have a tendency to agglomerate, are rendered non-agglomerating by contacting those particles with a molten thermoplastic resin, and then cooling the particles to a temperature below the melting or softening point of the thermoplastic resin.

## Description

The present invention relates to a method for producing non-agglomerating elastomeric particles and to the non-agglomerating elastomeric particles so produced.

### BACKGROUND OF THE INVENTION

When elastomers are formed as crumbs or particles, or are ground into crumbs or particles, those crumbs or particles have a tendency to adhere to each other and form agglomerates. The formation of agglomerates is enhanced under the temperature conditions which are usually encountered during transportation, storage or processing of elastomeric particles. Agglomerates are difficult to process in conventional equipment for processing pulverulent resins when used alone or in combination with other materials.

Free flowing elastomer-containing particles have been prepared by blending an elastomer with a thermoplastic polymer, such as polyethylene, polypropylene or copolymers of ethylene and propylene. However, such pellets are not suitable for use in many elastomer applications because high levels of the non-elastomeric polymer are required.

Mineral powders, such as silica and talc, have been added to granulated elastomers, in order to prevent the agglomeration of the elastomeric particles. These powders can be considered to function as flow control agents which serve to separate the elastomeric particles from one another thereby preventing their agglomeration. However, in order to prevent agglomeration, it is often necessary to add the powders in such large amounts that the powdered, pulverulent elastomer, when it is being processed, no longer exhibits the properties of the unpowdered elastomer. And since the additive employed to separate the elastomer particles is itself in the form of a fine powder, it separates in time from the larger elastomeric particles to form an undesirable, non-homogeneous dusty product. In addition to interfering with processing, the dust formed can present a health or safety risk when the particles are being processed.

Elastomeric particles have been treated by dusting with various organic materials, such as hydrocarbon waxes and powdered polyolefins. However, the treated particles eventually come together to form agglomerates because the waxes or resins which had covered the particles tend to separate from the particles. During storage, the separated wax or resin collects at the bottom of the storage container as "fines" resulting in an unacceptable heterogenous product.

Elastomeric particles have been coated with various coating materials by heating the particles to a temperature which is higher than the melting point of the coating material, and then contacting the heated particles with the coating material in the form of a fine powder. Since the elastomeric particles are tacky, particularly when heated, it is difficult to coat the particles evenly and obtain a uniform product using such procedure.

There is a need for a commercially feasible method of producing free-flowing elastomeric particles consisting predominately of the elastomer. It is, therefore, an object of the present invention to provide an improved method for preventing the agglomeration of elastomeric resin particles during storage and transport, and to provide non-agglomerating elastomeric resin particles which can be fabricated into desirable products using conventional processing equipment.

### SUMMARY OF THE INVENTION

In one aspect, the present invention is a method for making particles of an agglomerable elastomer non-aggldmerating which comprises contacting the agglomerable elastomeric particles with a molten thermoplastic resin, and then cooling the particles to a temperature below the melting or softening point of the thermoplastic resin.

In another aspect, the present invention is a method for making non-agglomerating elastomeric particles from agglomerable elastomeric particles which comprises contacting the agglomerable elastomeric particles with a molten thermoplastic resin, and then cooling the particles to a temperature below the melting or softening point of the thermoplastic resin.

In its composition aspects, the present invention is the non-agglomerating elastomeric particles prepared by the methods described above.

### BRIEF DESCRIPTION OF THE DRAWING

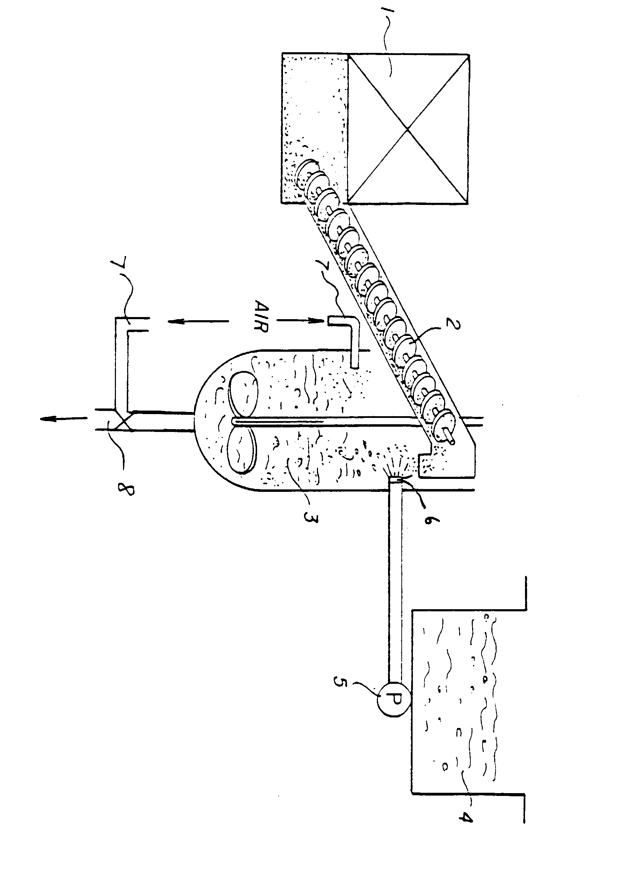

Figure 1 of the drawing is a schematic diagram of apparatus for practicing the method of the present invention.

### DETAILED DESCRIPTION OF THE INVENTION

The method of the present invention starts with elastomeric particles, which if otherwise untreated, would agglomerate in the interval between making the particles and processing the particles to form a finished product, or which would agglomerate prematurely during processing. These normally agglomerating particles, are kept in motion by agitation in a vessel equipped with stirring means, by tumbling rotation in a mixing device or by suspension, for example, in a stream of air, and are then contacted with the molten thermoplastic resin. The elastomeric particles may be preheated to allow the molten thermoplastic to form an even and strongly adherent coating on the elastomeric particles. The temperature of the coated elastomeric particles, while still undergoing agitation or tumbling, or while still in suspension, is lowered to below the melting point of the thermoplastic resin. Rapid cooling or quenching by a stream of refrigerated air, nitrogen or water, or contact of the coated particles with dry ice (solid carbon dioxide) is preferred.

The method of the present invention is applicable to making a wide variety of elastomeric particles non-agglomerating and is particularly applicable to those particles where the elastomers are tacky or exhibit cold flow. Illustrative, non-limiting examples of the elastomeric particles of to which this invention may be applied are nitrile rubbers, hydrogenated nitrile rubbers, ethylene-propylene rubbers, terpolymers of ethylene, propylene and a non-conjugated diene, natural rubbers, polyisobutylene, butyl rubber, halogenated butyl rubber, copolymers of butadiene with one or more polymerizable ethylenically unsaturated monomers, such as styrene, acrylonitrile, methyl methacrylate, and polymers of substituted butadienes, such as chlorobutadiene and isoprene.

These elastomers are obtainable, for example, in the form of aqueous lattices or dispersions and may be recovered as crumb rubbers by standard coagulation procedures. The elastomers are also available in bulk form and are suitable for use in the practice of the present invention after grinding into particles. Other procedures for preparing elastomeric particles are known to those skilled in the art. The method of the present invention does not depend on the particular procedure utilized to prepare the particles, but as indicated above, is applicable to elastomeric particles which have a tendency to agglomerate.

The particle size of the crumbs, ground powder or elastomeric particles utilized for practicing the method of the present invention will vary in accordance with the end use for which they are designed. In general, particle size is not critical but will generally be in the range of about 100 or 500 microns to about 6,000 microns.

Thermoplastic resins useful in practicing the method of the present invention are, for example, polymers such as polyethylene, polypropylene, poly(ethylene-vinyl acetate) and the like. In addition, the thermoplastic resin may be blended with up to 50% by weight of a waxy material, such as but not limited to straight chain saturated carboxylic acids of carbon lengths from C₂₈ to C₃₂ and oxidized polyethylene.

The resultant non-agglomerating elastomeric particles of the present invention are predominately elastomeric particles coated with a relatively thin layer of the thermoplastic material. The particles are coated preferably with 5-10% of the thermoplastic material and with no more than 25% by weight of the thermoplastic material.

Apparatus for practicing the method of the present invention is illustrated schematically in Figure 1. Elastomeric particles from a grinding or particle forming apparatus 1 are conveyed by air or by mechanical means 2 to a vessel 3 equipped with stirring means. At the same time, molten thermoplastic resin from tank 4 is pumped via metering pump 5 to sprayers 6 located within vessel 3 and forms a thin and even coating on the elastomeric particles. The coated elastomeric particles are rapidly cooled by the passage of air, preferably chilled, from inlets 7 through vessel 3 and at the outlet port 8 from vessel 3. The coated elastomeric particles are then allowed to cool to near room temperature and then are bagged and stored. The stored particles treated by the method of the present invention did not agglomerate and were readily processable using conventional processing equipment.

It is apparent from Figure 1 that the method of the present invention can be practiced batchwise or in a continuous manner.

The following two examples illustrate an alternate embodiment of the invention wherein the thermoplastic resin was melted while in contact with the elastomer in a vessel equipped with a stirrer. Cooling was effected in the first example by blowing air into the blend and in the second example by adding dry ice to the vessel. Stirring was continued as the contents of the vessel were being cooled.

A nitrile rubber (2280 grams) was ground using a rotating knife blade grinder with a 3/8" screen. The ground rubber crumb was then transferred to a Henschel mixer and a powder of a thermoplastic polyethylene (228 grams) melting at 215°F was added. The mixer was turned on and run at high speed (2250 RPM), and heat was allowed to build up until a maximum temperature of 230°F was obtained. Then, the speed was reduced to 650 RPM to keep the coated rubber crumb moving and unable to agglomerate while compressed air was introduced to cool the material down to approximately 190°F. The material was dumped out of the mixer and spread out and allowed to cool to room temperature. The cooled material, which was coated with approximately 7-8% of the thermoplastic resin, was free flowing and non-agglomerating.

The same acrylonitrile-butadiene rubber (2280 grams) as was used in the previous example was ground using a rotating knife blade grinder with a 3/8" screen installed. The ground rubber crumb was then transferred to a Henschel mixer and a powder of a polyethylene having a melting point of 215°F was added. The mixer was turned on and run at high speed (2250 RPM), and heat was allowed to build up until a maximum temperature of 220°F was obtained after about approximately 8 minutes. Then, the speed was reduced to 1120 RPM to keep the coated rubber crumb moving and unable to agglomerate while dry ice was introduced to cool the material down to approximately 100°F. The cooled material was free flowing and non-agglomerating, and was much lighter in color than the cooled material prepared in the previous example. The elastomer was uniformly coated (as observed using a low power microscope) with about 8% by weight of polyethylene.

In summary, it has been found that elastomeric particles, such as those of natural and synthetic powdered and crumb rubbers, can be maintained free flowing and free of agglomeration upon storage, shipping and handling, by coating with a thermoplastic resin. The non-agglomerating elastomers can be used alone or in blends with other materials during molding and in making shaped articles.

The present invention has been described in terms of its specific embodiments and non-limiting examples. Various modifications in the method of the present invention will be apparent to those skilled in the art and are included within the scope of the invention.

## Claims

1. A method for making particles of an agglomerable elastomer non-agglomerating which comprises contacting the agglomerable elastomeric particles with a molten thermoplastic resin, and cooling the particles to a temperature below the melting point of the thermoplastic resin.

2. A method for making non-agglomerating elastomeric particles from agglomerable elastomeric particles which comprises contacting the agglomerable elastomeric particles with a molten thermoplastic resin, and then cooling the particles to a temperature below the melting or softening point of the thermoplastic resin.

3. A method according to claims 1 or 2, wherein the suspension is cooled by the addition of a cold fluid or gas.

4. A method according to claims 1 or 2, wherein the suspension is cooled by the addition of dry ice.

5. Non-agglomerating particles made by the process of claim 1 or claim 2.

6. Non-agglomerating elastomeric particles prepared by contacting agglomerable elastomeric particles with a molten thermoplastic resin, and cooling the particles to a temperature below the melting point of the thermoplastic resin.

7. A method according to claim 1 or 2, wherein the elastomer is a nitrile rubber.

8. A method according to claim 1 or 2, wherein the thermoplastic resin is polyethylene.

9. A method according to claim 1 or 2, wherein the thermoplastic resin is poly(ethylene-vinyl acetate).

10. A method according to claim 1 or 2, wherein the thermoplastic resin contains a waxy material.

11. A method according to claim 1 or 2, wherein the agglomerable elastomeric particles are contacted with the molten thermoplastic resin by spraying the molten thermoplastic resin onto the agglomerable elastomeric particles.
